# EUROPÄISCHE PATENTSCHRIFT

(11) **EP 2 331 831 B1**
(45) Veröffentlichungstag und Bekanntmachung des Hinweises auf die Patenterteilung: **29.06.2016**
(21) Anmeldenummer: 09782342.1
(22) Anmeldetag: 28.08.2009
(51) Int. Cl.: F16B 21/02, G01D 11/30

(54) **BEFESTIGUNGSVORRICHTUNG UND VERFAHREN ZUM BEFESTIGEN IN EINER ÖFFNUNG IN EINER WAND**
MOUNTING DEVICE AND METHOD OF FASTENING IN AN OPENING IN A WALL
DISPOSITIF DE FIXATION ET PROCÉDÉ DE FIXATION DANS UNE OUVERTURE DANS UNE PAROI

(30) Priorität: 22.09.2008 DE 102008048318
(43) Veröffentlichungstag der Anmeldung: 15.06.2011
(73) Patentinhaber: Robert Bosch GmbH, 70442 Stuttgart (DE); Autoliv Development AB, 447 83 Vårgårda (SE); Conti Temic Microelectronic GmbH, 90411 Nürnberg (DE); TRW Automotive GmbH, 73553 Alfdorf (DE); Audi AG, 85045 Ingolstadt (DE); Bayerische Motoren Werke Aktiengesellschaft, 80809 München (DE)
(72) Erfinder: CHRISTOPH, Markus, 93055 Regensburg (DE); SEITZ, Roland, 72147 Nehren (DE); BAUR, Richard, 85276 Pfaffenhofen (DE); MASCHA, Gerog, 78315 Radolfzell (DE); BREITENBERGER, Markus, 83575 Neufahrn (DE); KARDELL, Dag-Olof, S-58551 Mjolby (SE); ADAM, Boris, 71126 Gaeufelden (DE); KLIERL, Thomas, 86633 Neuburg (DE); OCKER, Frank, 81679 München (DE); BALOGH, Adam, H-1204 Budapest (HU); PLANKL, Christian, 93055 Regensburg (DE); KAUPP, Michael, 72160 Horb (DE); MENZEL, Werner, 31226 Peine (DE); BECHTLE, Rolf, 74321 Bietigheim-Bissingen (DE)
(86) Internationale Anmeldenummer: PCT/EP2009/061144
(87) Internationale Veröffentlichungsnummer: WO 2010/031676

(56) Entgegenhaltungen:
- DE-A1- 2 527 404
- DE-A1-102007 008 862

## Beschreibung

Die vorliegende Erfindung betrifft eine Befestigungsvorrichtung zur Befestigung eines Elementes in einer Öffnung einer Wand gemäß Anspruch 1 sowie ein Verfahren zum Befestigen einer Befestigungsvorrichtung an einer Wand gemäß Anspruch 12.

### Stand der Technik

Bauteile, insbesondere Sensoren (z.B. für Rückhaltesysteme) werden in der Automobilindustrie auf unterschiedliche Weise am Fahrzeug befestigt. Typischerweise werden Befestigungsformen wie Anschrauben, Nieten und Kleben angewendet. Speziell bei Sensoren in sicherheitskritischer Anwendung wie z.B. Airbag-Systemen ist die sichere Montage von entscheidender Bedeutung. Zum einen muss die korrekte Montage bei Verlassen des Werkes sichergestellt sein. Gleichzeitig aber muss der Sensor über die gesamte Lebensdauer, bei Reparaturen u.ä. ebenfalls sicher in der richtigen Lage und Position montiert bleiben oder sicher austauschbar sein.

Bei heutigen Sensoren, die z.B. per Anschraubung befestigt werden, wird daher in vielen Fällen die Montage dokumentiert. Dies kann z.B. erfolgen, indem beim Anschraubprozess des Sensors Drehmoment und Drehwinkel überwacht und aufgezeichnet werden.

Aus der Druckschrift DE 199 23 985 A1 ist eine Sensorbaugruppe bekannt, bei der das Gehäuse eines Luftdrucksensors, der zur Seitenaufprallsensierung verwendet wird, über Befestigungsmittel, beispielsweise Schrauben, an einer Wand im Fahrzeug befestigt wird.

Aus der DE 25 27 404 A1 bzw. GB 1 509 287 A ist bekannt, eine Befestigungsvorrichtung zur Befestigung in einer Öffnung einer Wand eines Fahrzeugs. Diese Befestigungsvorrichtung umfasst ein Trägerorgan und einen Haltekörper, der drehbar durch das Trägerorgan hindurch angeordnet ist und eine Mehrzahl von Haltezapfen zum Befestigen der Befestigungsvorrichtung an der Wand aufweist.

Die Befestigung umfasst das Einführen der Trägeransätze und des Haltekörpers in die Wandöffnung und das Drehen der Haltezapfen gegenüber dem Trägerorgan zum Verriegeln der Befestigungsvorrichtung an der Wand.

### Offenbarung der Erfindung

Die vorliegende Erfindung schafft eine Befestigungsvorrichtung zur Befestigung in einer Öffnung einer Wand eines Fahrzeugs, wobei die Befestigungsvorrichtung folgende Merkmale aufweist:
- ein Trägerelement mit zumindest einer Trägernase; und
- ein Halteelement mit zumindest einem Halteflügel zum Befestigen der Befestigungsvorrichtung an der Wand, wobei das Halteelement zur Befestigung der Befestigungsvorrichtung gegenüber dem Trägerelement drehbar durch das Trägerelement angeordnet ist und wobei die Trägernase ausgebildet ist, um eine Drehung des Trägerelementes zu blockieren.

Ferner schafft die Erfindung ein Verfahren zum Befestigen einer Befestigungsvorrichtung zur Befestigung eines Elements in einer Öffnung einer Wand eines Fahrzeugs, wobei die Befestigungsvorrichtung ein Trägerelement mit zumindest einer Trägernase und ein Halteelement mit zumindest einem Halteflügel zum Befestigen der Befestigungsvorrichtung an der Wand aufweist, wobei das Halteelement zur Befestigung der Befestigungsvorrichtung gegenüber dem Trägerelement drehbar durch das Trägerelement angeordnet ist und wobei die Trägernase ausgebildet ist, um eine Drehung des Trägerelementes zu blockieren, wobei das Verfahren die folgenden Schritte umfasst:
- Einführen der Trägernase und des Halteelementes in die Öffnung in der Wand; und
- Drehen des Halteflügels gegenüber dem Trägerelement, um die Befestigungsvorrichtung an der Wand zu verriegeln, wobei die Trägernase eine Drehung des Trägerelementes blockiert.

Die vorliegende Erfindung basiert auf der Erkenntnis, dass eine einfache und zugleich sichere Befestigungsmöglichkeit zur Befestigung eines Elementes an einer Wand durch das Vorsehen von einer Befestigungsmöglichkeit mit Halteflügeln besteht, die sich beim Befestigen an einer Hinterseite der Wand verdrehen, an dem die Befestigungsvorrichtung befestigt werden soll. Vor dem Befestigen werden die Halteflügel in eine Position gedreht, in der sie sich durch ein länglich ausgestaltetes Loch (eine Öffnung) in der Wand stecken lassen, worauf das Verdrehen der Halteflügel an der Hinterseite der Wand erfolgt. Damit sich die Befestigungsvorrichtung beim Befestigungsvorgang nicht gegenüber der Wand verdrehen kann, kann eine Trägernase an einem (im befestigten Zustand an der Wand fixierten) Trägerelement vorgesehen werden, die beispielsweise Eingriff in die Öffnung nimmt. An dem Trägerelement oder dem Haltelement können weitere Elemente wie beispielsweise ein Sensor befestigt werden, der in einer exakt vordefinierten Position gehalten werden soll. Dadurch, dass die Verriegelung nach Art eines Bajonettverschlusses ausgestaltet ist, kommt der erfindungsgemäße Ansatz auch ohne weitere Elemente wie Schrauben zur Befestigung der Befestigungsvorrichtung aus. Zugleich kann durch das Andrücken und Verdrehen des Halteelementes eine sehr schnelle Befestigungsmöglichkeit für die Befestigung von Elementen an der Wand bereitgestellt werden.

Der erfindungsgemäße Ansatz bietet den Vorteil, dass die Befestigungsvorrichtung konstruktiv sehr einfach ausgestaltet ist. Weiterhin können die erforderlichen Bauelemente durch einfache Herstellungsverfahren wie beispielsweise ein Kunststoffspritzgussverfahren hergestellt werden, so dass auch eine preisgünstige Herstellung möglich ist. Zugleich stellt der erfindungsgemäße Ansatz sicher, dass sich die Befestigungsvorrichtung (und ein evtl. daran befestigtes Element) bei oder nach dem Befestigungsvorgang sicher in einer vordefinierten Position halten lassen, so dass ein Verrutschen der Ausrichtungsposition später nahezu ausgeschlossen ist.

In einer günstigen Ausführungsform der Erfindung weist das Halteelement eine Mehrzahl von Halteflügeln auf. Dies bietet den Vorteil, dass einerseits eine gleichmäßige Verteilung der Haltekraft auf die Rückseite der Wand beim Befestigen aufgebracht wird und dabei die Wahrscheinlichkeit eines Verrutschens der Befestigungsvorrichtung weiter reduziert wird. Andererseits sichert auch das Vorsehen von zumindest zwei Halteflügeln die Stabilität des Halteelementes ab, so dass bei einer Beschädigung eines der Halteflügel keine schwerwiegende Beeinträchtigung der Funktionalität zu befürchten ist.

Erfindungsgemäß weist der zumindest eine Halteflügel eine Mehrzahl von Bereichen mit einer unterschiedlichen Dicke auf. Dies bietet den Vorteil, dass einerseits eine Befestigung an Wänden mit unterschiedlichen Wandstärken möglich ist und andererseits auch eine unterschiedliche Anpresskraft auf die Wand ausgeübt werden kann.

In einer weiteren Ausführungsform der Erfindung kann der zumindest eine Halteflügel im Dickenprofil eine Schräge aufweisen. Dies bietet einen Vorteil beim Festziehen des Halteflügels, da sich dieser durch die Schräge selbst sichert und die Befestigungsvorrichtung an die Wand zieht und dort fixiert.

Um eine Abdichtung der Öffnung gegen Schmutz oder Flüssigkeiten zu gewährleisten, kann die Befestigungsvorrichtung ferner ein Dichtelement aufweisen, welches ausgebildet ist, um die Öffnung in der Wand fluiddicht abzuschließen.

Auch kann der zumindest eine Halteflügel gemäß einer anderen Ausführungsform eine Breite aufweisen, die ausgebildet ist, um bei der Erkennung der Position des Halteflügels eine Orientierung der Befestigungsvorrichtung zu codieren. Dies bietet den Vorteil, dass die Position bzw. Ausrichtung der Befestigungsvorrichtung bei der Montage einfach durch das Erkennen des charakteristischen Halteflügels möglich wird, so dass auf eine zusätzliche Codierung oder Markierung dieser Position verzichtet werden kann.

Gemäß einer anderen Ausführungsform der Erfindung ist die Trägernase ausgebildet, um eine Hilfe beim Einfügen in die Öffnung zu bieten, wobei die Trägernase sich vom Trägerelement bis über eine äußere Kante des Halteflügels erstreckt. Dies bietet einen Schutz des Halteflügels gegen eine Beschädigung beim Einführen in die Öffnung und erleichtert einem Monteur zusätzlich das Einführen der Befestigungsvorrichtung in die Öffnung bei verdeckter Sicht auf die Öffnung.

Auch kann in einer anderen Ausführungsform der Erfindung das Trägerelement oder das Halteelement eine mechanische Einheit aufweisen, die ausgebildet ist, um einem Benutzer ein Verdrehen des Halteelementes in Bezug zum Trägerelement um einen vorbestimmten Winkel zu signalisieren. Dies bietet den Vorteil, dass einem Monteur durch einfache konstruktive Elemente beim Befestigen der Befestigungsvorrichtung signalisiert werden kann, dass der Halteflügel in eine Position gedreht wurde, in der ein sicherer Halt gewährleistet ist.

Auch kann in einer anderen Ausführungsform der Erfindung das Trägerelement und/oder das Halteelement ein Schutzelement aufweisen, das ausgebildet ist, um in einer Position des Halteflügels im unbefestigten Zustand eine Steckverbindungsmöglichkeit zur Kontaktierung eines Sensors zu blockieren und bei einer Verdrehung des Halteflügels um einen vorbestimmten Winkel in Bezug zur genannten Position des Halteflügels die Steckverbindungsmöglichkeit zur Kontaktierung für den Sensor freizugeben. Dies bietet die Möglichkeit einem Monteur der Befestigungsvorrichtung mitzuteilen, dass die Befestigungsvorrichtung noch nicht korrekt verbaut wurde. Wird auf diese Weise verhindert, dass das Anstecken der Steckverbindung zur Kontaktierung des Sensors freigegeben wird, muss vor weiteren Arbeitsgängen eine Nachjustierung der Befestigungsvorrichtung erfolgen, so dass die sichere Befestigung gewährleistet werden kann.

Auch kann das Trägerelement und/oder das Halteelement zumindest eine Sperreinheit aufweisen, die ausgebildet ist, um das Halteelement nach Erreichen einer vorbestimmten Position in dieser vorbestimmten Position zu halten. Auf diese Weise kann vorteilhaft verhindert werden, dass sich die Befestigungsvorrichtung aus der erreichten gewünschten Position wieder herausdrehen kann und damit eine sichere Befestigung wieder verrutschen kann.

Auch kann ein Sensorelement mit einer Befestigungsvorrichtung vorgesehen sein, wie es in den vorstehenden Ausführungen beschrieben ist. Dies bietet den Vorteil, dass das sich in einer solchen Konfiguration eine besonders sichere Position und Ausrichtung des Sensorelementes sicherstellen lässt und somit die Funktionalität des Sensorelementes bestmöglich gewährleistet wird.

### Kurze Beschreibung der Zeichnungen

Die Erfindung wird nachstehend anhand der beigefügten Figuren beispielhaft näher erläutert. Es zeigt:
- Fig. 1: zwei Darstellungen von Lochbildern von Öffnungen in der Wand, in denen die Befestigungsvorrichtung eingebracht und befestigt werden kann;
- Fig. 2: eine perspektivische Darstellung eines Ausführungsbeispiels der vorliegenden Erfindung;
- Fig. 3: eine perspektivische Darstellung des Ausführungsbeispiels nach Fig. 2 der vorliegenden Erfindung beim Verbau in einen Träger;
- Fig. 4: eine weitere perspektivische Darstellung des in Fig. 3 gezeigten Ausführungsbeispiels der vorliegenden Erfindung, wobei ein Ausschnitt in Schnittdarstellung wiedergegeben ist;
- Fig. 5: Darstellungen eines Ausführungsbeispiels der vorliegenden Erfindung aus unterschiedlichen Perspektiven;
- Fig. 6: Darstellungen des in Fig. 5 gezeigten Ausführungsbeispiels der vorliegenden Erfindung, wobei die Bemaßung für eine mögliche Ausführung des Ausführungsbeispiels angegeben wurden;
- Fig. 7: eine Darstellung einer Querschnittsansicht des in Fig. 5 oder 6 dargestellten Ausführungsbeispiels;
- Fig. 8: perspektivische Darstellungen von Ausführungsbeispielen der Erfindung, die Blockadeelemente gegen ein Verdrehen der Befestigungsvorrichtung nach Erreichen der vordefinierten Position verhindern;
- Fig. 9: perspektivische Darstellungen von Ausführungsbeispielen der Erfindung, die Einbauhilfen zum schnellen und sicheren Einbau der erfindungsgemäßen Befestigungsvorrichtung in die Öffnung in der Wand sicherstellen; und
- Fig. 10: ein Ablaufdiagramm eines Ausführungsbeispiels der Erfindung als Verfahren.

Eventuell angegebene Dimensionen und Maße sind nur exemplarisch, so dass die Erfindung nicht auf diese Dimensionen und Maße beschränkt ist. Gleiche oder ähnliche Elemente sind mit gleichen oder ähnlichen Bezugszeichen versehen. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden können oder sie zu weiteren, hier nicht explizit beschriebenen Kombinationen zusammengefasst werden können.

### Ausführungsformen der Erfindung

Zweck der Erfindung ist es insbesondere, das Design eines Sensors bzw. einer Befestigungsvorrichtung derart auszulegen, dass die Montage der Befestigungsvorrichtung, die einen Sensor tragen kann, ohne zusätzliche Befestigungsmittel möglich ist. Gleichzeitig soll die Montage einfach und sicher sein, um einen Fehlverbau so weit mechanisch möglich zu verhindern bzw. zu erschweren. Weiterhin ist es ein Zweck der Erfindung, die Befestigungsvorrichtung bzw. einen Sensor so auszulegen, dass er universell einsetzbar ist und z.B. auf Türträger mit unterschiedlicher Materialstärke montierbar ist.

Die Erfindung wird im Weiteren am Beispiel eines Airbag-Drucksensors im Detail beschrieben. Sie ist aber auf andere Sensorarten und -applikationen übertragbar. Beim Airbag-Drucksensor gestaltet sich die Einsatzsituation derart, dass der Sensor in die Seitentüren der Fahrzeuge verbaut wird, um dort die Deformation der Türe im Falle eines Seitencrashes zu detektieren.

Die Erfindung beruht im Wesentlichen auf der Verwendung bzw. Weiterentwicklung des Bajonett-Befestigungskonzeptes für Sensoren. Die Befestigung erfolgt insbesondere mittels einer Drehbewegung der Befestigungsvorrichtung (bzw. des Sensors) oder eines an der Befestigungsvorrichtung (bzw. am Sensor) befestigten Teiles gegenüber dem Türträger oder gegenüber einem anderen Träger bzw. einer Wand mit entsprechender Geometrie. Im Träger bzw. der Wand sollte lediglich ein Lochbild vorgesehen werden, welches eine "Bajonett-Befestigung" erlaubt sowie, falls eine Dichtfunktion des Sensors gegenüber dem Träger gewünscht ist, eine ausreichend ebene, definierte Fläche um das Befestigungsloch gegeben sein.

Die Befestigungsvorrichtung bzw. der Sensor besteht dabei zum Beispiel aus zwei gegeneinander drehbaren Komponenten, wobei eine Komponente bei der Montage gegenüber dem Träger verdreht wird, die andere Komponente jedoch im Träger fest fixiert ist und bei der Montage entsprechend nicht gedreht wird.

Die Vorteile des erfindungsgemäßen Ansatzes lassen sich dabei folgendermaßen zusammenfassen:
- Die Montage des Sensors ist ohne zusätzliche Befestigungsmittel möglich.
- Die Montage des Sensors kann auf Träger bzw. Wände unterschiedlicher Stärke einfach ermöglicht werden.
- Am Sensor können Vorrichtungen angebracht werden, die das einfache Einfädeln in das Lochbild und die einfache und sichere Montage ermöglichen. Dies sind mechanische Einfädelhilfen (Schrägen), mechanische Kodierungen für eindeutigen Verbau (Schutz gegen verdrehten Einbau), mechanische Fixierungen und Sperren sowie Vorrichtungen, die durch optische, haptische und/oder akustische Rückmeldung an den Operator die Kontrolle des Einbauprozesses ermöglichen.
- Die Montage des Sensors erfolgt beispielsweise mittels eines Bajonett-Verschlussartigen Verriegelungselementes; dadurch wird die Haltekraft über eine inflexible und robuste mechanische Vorrichtung aufgebracht
- Der Sensor kann derart ausgeführt werden, dass die Kontaktierung des Steckers erst dann möglich ist, wenn der Sensor in den Träger korrekt mit ausreichendem Drehwinkel montiert wurde. Solange die Drehbewegung nicht komplett ausgeführt wurde ist der Stecker mechanisch gesperrt. Gleichzeitig ist es möglich das Design so auszulegen, dass, wenn der Gegenstecker auf dem Sensor gesteckt ist, das Herausdrehen des Sensor aus dem Träger nicht möglich weil mechanisch gesperrt ist.
- Am Sensor kann eine Verdrehsperre angebracht sein in ein- oder mehrfacher Ausführung, die es nicht erlaubt, die beiden Komponenten des Sensors gegeneinander zu drehen, solange der Sensor nicht auf den Träger angedrückt wird. Damit wird ein Fehlverbau bzw. eine Freigabe des Steckers durch Verdrehen der Sensor-Komponenten in beliebiger Position erschwert bzw. vermieden.

Zusammenfassender Vorteil der Erfindung ist, dass eine solche Befestigungsvorrichtung bzw. ein derart ausgeführter Sensor sicher und einfach ohne zusätzliche Hilfsmittel montiert werden kann.

Das Wirkprinzip ist in den beigefügten Skizzen und Zeichnungen der Figuren beispielhaft näher dargestellt.

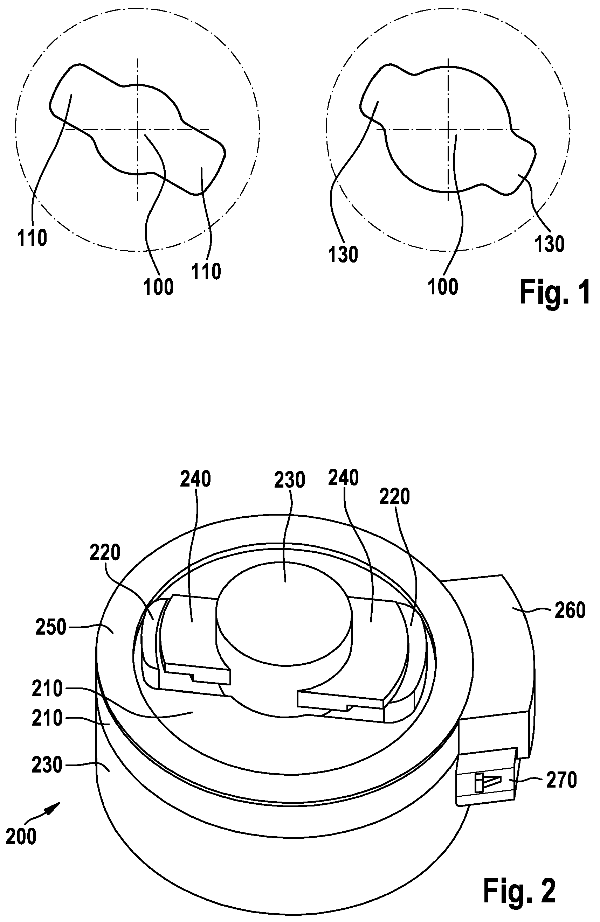

Fig. 1 zeigt zunächst zwei Darstellungen von Lochbildern von Öffnungen in einem Träger bzw. einer Wand, wobei die erfindungsgemäße Befestigungsvorrichtung in diese Löcher 100 der Wand 105 eingefügt werden kann. Die Löcher 100 sind dergestalt, dass sie um das eigentliche zentrale Loch 100 Seitenbereiche 110 unterschiedlicher Breite aufweisen, durch welche die Halteflügel der Befestigungsvorrichtung geführt werden können. Die Seitenbereiche 110 sind dabei unterschiedlich breit, so dass durch die Breite der Halteflügel eine Codierung der Position der Befestigungsvorrichtung beim Einführen in das Loch 100 in der Wand 105 möglich wird.

In Fig. 2 ist ein Ausführungsbeispiel der vorliegenden Erfindung als perspektivische Darstellung wiedergegeben. Die Befestigungsvorrichtung 200, die beispielsweise eine Trägerhalterung eines Sensors oder der Sensor selbst sein kann, umfasst ein Trägerelement 210 zur Auflage an dem Träger oder der Wand, wobei das Trägerelement eine Trägernase 220 umfasst. Ferner weist die Befestigungsvorrichtung 200 ein Halteelement 230 mit Halteflügeln 240 auf. Das Halteelement 230 ist drehbar in Bezug zu dem Trägerelement 210 angeordnet, so dass eine Drehachse des Halteelementes 230 durch das Trägerelement 210 führt.

Die Trägernasen 220 sind in diesem Ausführungsbeispiel als Einfädelhilfe für die Montage der Befestigungsvorrichtung 200 in die Öffnungen 100 in der Wand 105 vorgesehen, derart, dass die einen äußersten Bereich der Halteflügel 220 überdecken und somit nicht nur diese bei der Einführung in die Öffnung schützen sondern auch eine Führung bei der Montage bietet, wenn die Öffnung in der Wand beispielweise durch das Trägerelement 210 verdeckt ist. Auch können die Trägernase 220 bzw. die beiden Trägernasen 220 ähnlich den beiden Halteflügeln 240 unterschiedlich breit sein, so dass die Codierung der Lage der Befestigungsvorrichtung 200 ebenfalls durch die Trägernase240 möglich ist.

Die Halteflügel 240 können dabei entsprechend den unterschiedlichen Breiten der Seitenbereiche 110 der Löcher 100 ausgestaltet sein, um eine Codierung der Position oder Ausrichtung der Befestigungsvorrichtung beim Einbau sicherzustellen. Aus Fig. 2 ist ebenfalls ersichtlich, dass die Halteflügel 240 unterschiedliche Teilbereiche mit unterschiedlicher Dicke aufweisen, um Eingriff in Wände mit unterschiedlichen Wandstärken einfach nehmen zu können, ohne dass unterschiedliche Befestigungsvorrichtungen dafür erforderlich wären. Auch ist in Fig. 2 ein Dichtelement 250 erkennbar, das um einen Rand des Trägerelementes 210 ringförmig angeordnet ist und die Öffnung bzw. das Loch 100 fluiddicht gegen Flüssigkeiten oder Gase verschließen kann. Ferner ist auch in Fig. 2 ein Schutzelement 260 ersichtlich, welches am Trägerelement 210 bzw. (in der Ansicht aus Fig. 2 nicht ersichtlich) am Halteelement 230 befestigt sein kann. Das Schutzelement 260 ist derart ausgestaltet, dass ein Steckverbindunganschluss 270 erst bei einer Verdrehung des Halteelementes gegenüber dem Trägerelement 210 freigegeben wird, wodurch eine Steckverbindungsmöglichkeit zu einem auf der Befestigungsvorrichtung angebrachten Sensor erst nach einwandfreier Verdrehung und damit Verriegelung des Halteelementes 230 möglich ist.

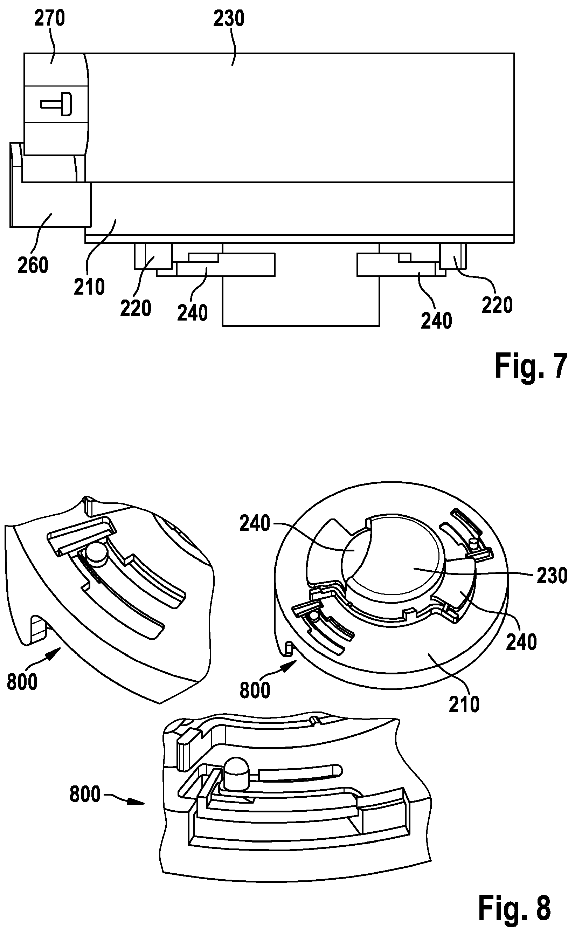

Um Toleranzen bei Träger-/Wanddicke und Unebenheiten ausgleichen zu können, können zwei Ausgleichsmechanismen genutzt werden. Erstens kann der Bajonett- bzw. Halteflügel 240 mehrstufig ausgeführt sein, wie dies bereits in Fig. 2 dargestellt ist. In Verbindung mit einem entsprechend angepassten inneren Radius 100 des Lochbildes kann so die Anpressung der Befestigungsvorrichtung 200 bzw. des Sensors oder die mögliche Wandstärke (Trägerstärke) variiert werden. Dies ist aus der Figur 1 und der nachfolgend beschriebenen Figur 7 ersichtlich. Zum Zweiten kann die Dichtung 250 oder ein kompressibles Ausgleichselement zwischen Befestigungsvorrichtung/Sensor 200 und Wand/Träger 105 eingesetzt werden, welches bei kleinerer Variation der Trägerstärke oder bei Unebenheiten im Träger einen Ausgleich in begrenztem Umfang ermöglicht.

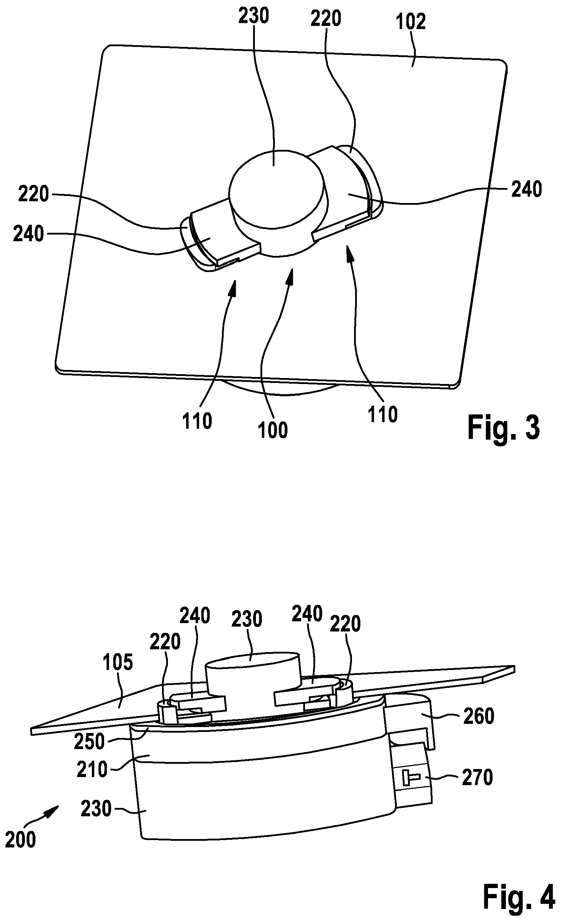

In Fig. 3 ist der Verbau eines Ausführungsbeispiels der vorliegenden Erfindung dargestellt. Hierbei werden die Trägernasen 220, die im vorliegenden Beispiel als Einführungshilfen bzw. Einfädelhilfen ausgestaltet sind, zusammen mit den Halteflügeln 240 des Halteelementes 230 in das Loch 100 bzw. die Seitenbereiche 110 in der Wand 105 eingefügt. In Fig. 3 ist der Zustand nach dem Einfügen von der Rückseite der Wand 105 dargestellt.

In Fig. 4 ist eine Seitenansicht der Befestigungsvorrichtung nach dem Einlegen bzw. Einführen des Halteelementes 230 und der Trägernase 220 in die Öffnung 100 der Wand 105 ersichtlich. Dabei wird auch die Anordnung des Schutzelementes auf dem Trägerelement 210 ersichtlich, so dass beim Verdrehen des Halteelementes 230 das Schutzelement 260 die Steckverbindungsmöglichkeit 270 freigibt. Alternativ kann auch das Trägerelement 210 relativ zum Halteelement 230 verdreht werden; es ist lediglich sicherzustellen, dass sich die Halteflügel 220 auf der Rückseite der Wand 105 verdrehen und eine Verriegelung der Befestigungsvorrichtung 200 in der Wand 105 resultiert.

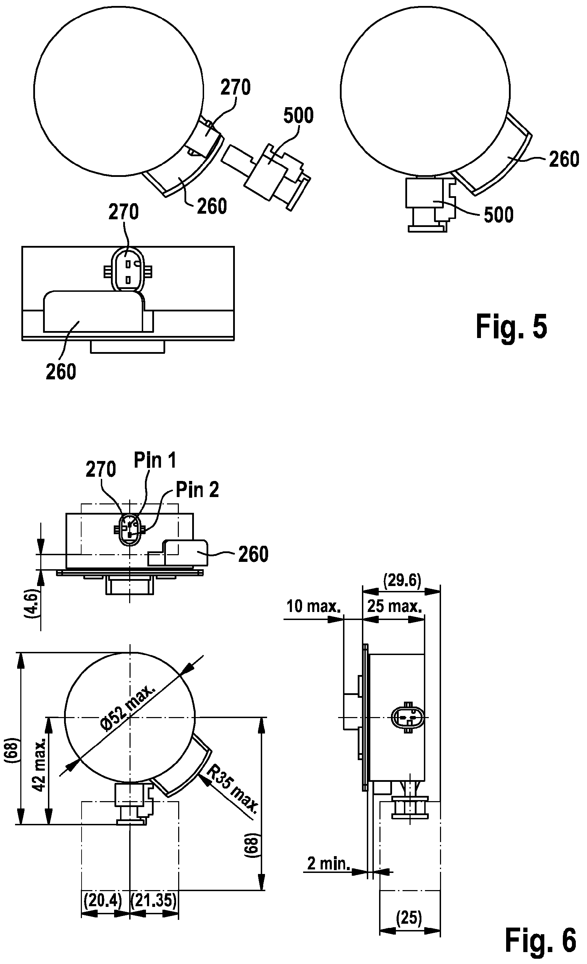

In Fig. 5 ist eine solche Freigabe der Steckverbindungsmöglichkeit 270 mit einem externen Stecker 500 dargestellt, wobei in den linken Darstellungen aus Fig. 5 die Anordnung vor der Befestigung in der Wand bzw. vor einem Verdrehen des Halteelementes 230 gegenüber dem Trägerelement 210 in Seitenansicht (untere Darstellung) und Aufsichtdarstellung (obere Darstellung) und in der rechten Darstellung aus Fig. 5 eine Anordnung nach dem korrekten Verdrehen des Halteelementes 210 gegenüber dem Trägerelement 230 wiedergegeben ist. Hierbei wird auch ersichtlich, dass die Freigabe der Steckverbindungsmöglichkeit 270 erst nach dem Verdrehen um einen vorbestimmten Winkel möglich ist, da das Schutzelement 260 erst nach dem Verdrehen um diesen vorbestimmten Winkel die Stechverbindungsmöglichkeit 270 zum Anstecken eines Steckers 500 freigibt.

Fig. 6 zeigt eine konkrete Ausgestaltungsmöglichkeit mit Bemaßung der Befestigungsvorrichtung bzw. eines Sensors, wie er in Fig. 5 dargestellt ist.

Fig. 7 zeigt eine schematische Querschnittsdarstellung der Befestigungsvorrichtung gemäß dem Ausführungsbeispiel, wie es auch in den Figuren 2 bis 6 wiedergegeben ist.

Fig. 8 zeigt mögliche Blockadeelemente 800 in der Befestigungsvorrichtung 200 in unterschiedlichen vergrößerten perspektivischen Ansichten. Das jeweils dargestellte Blockadeelement 800 ist dazu vorgesehen, um ein Verdrehen der Befestigungsvorrichtung 200 gegenüber der Steckerverriegelung 260 ohne korrekten Verbau zu vermeiden. Das Blockadeelement 800 kann dabei derart ausgebildet sein, dass es bei einem Erreichen der vordefinierten Endposition beim Verdrehen des Trägerelementes 210 oder des Halteelementes 210 einrastet und damit eine Sperrfunktion aktiviert, die ein Zurückdrehen des Halteelementes 230 oder des Trägerelementes 210 verhindert.

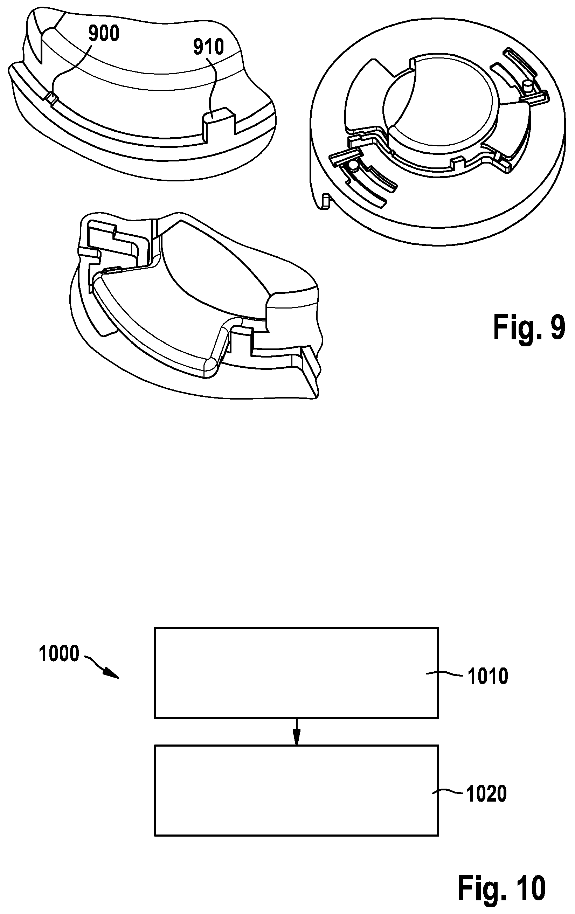

In Fig. 9 sind in unterschiedlichen perspektivischen Darstellungen mögliche Verbauhilfen bildlich dargestellt, die beispielsweise Führungen oder eine Verrastung 900 an einem definierten Endanschlag 910 darstellen.

Ferner ist in Fig. 10 ein Ablaufdiagramm eines Ausführungsbeispiels der vorliegenden Erfindung als Verfahren dargestellt. Das Verfahren 1000 ist zum Befestigen einer Befestigungsvorrichtung 200 zur Befestigung eines Elements in einer Öffnung 100 einer Wand 105 vorgesehen, wobei die Befestigungsvorrichtung 200 ein Trägerelement 210 mit zumindest einer Trägernase 220 und ein Halteelement 230 mit zumindest einem Halteflügel 240 zum Befestigen der Befestigungsvorrichtung an der Wand aufweist, wobei das Halteelement 230 zur Befestigung der Befestigungsvorrichtung 200 gegenüber dem Trägerelement 210 drehbar durch das Trägerelement 210 angeordnet ist und wobei die Trägernase 220 ausgebildet ist, um eine Drehung des Trägerelementes 210 in der Wand 105 zu blockieren. Das Verfahren 1000 umfasst einen ersten Schritt des Einführens 1010 der Trägernase und des Halteelementes in die Öffnung in der Wand und einen zweiten Schritt 1020 des Drehens des Halteflügels gegenüber dem Trägerelement, um die Befestigungsvorrichtung an der Wand zu verriegeln, wobei die Trägernase eine Drehung des Trägerelementes blockiert.

Zusammenfassend ist anzumerken, dass ein Sensor bzw. eine Befestigungsvorrichtung für einen Sensor, wie oben bereits angedeutet, aus zwei oder mehr gegeneinander drehbaren Teilen bestehen kann. Im angeführten Beispiel ist der Sensor derart ausgeführt, dass der Sensor 200 mit einer sog. Dichtplatte 250 versehen ist, die z.B. einfach auf den Sensor 200 aufgesteckt werden kann (siehe auch Figuren 5 und 8). Die Dichtplatte 250 kann über einen Fixierkranz verfügen, der im Anlieferzustand des Sensors 200 an die am Sensor befestigten Bajonett-Flügel 240 angrenzt (siehe Figuren 2, 3, 4, 8 und 9). Beim Einfädeln in das Loch 100 im Träger 105 werden Fixierkranz 220 und Bajonettflügel 240 durch das Loch 100 bzw. 110 hindurch gesteckt. Danach wird der Sensor, der beispielsweise am Halteelement 230 befestigt ist, gegenüber der Dichtplatte 250 (die beispielsweise auf dem Trägerelement 210 angeordnet ist) sowie dem Träger 105 um einen gewissen Winkel verdreht. Die Dichtplatte 250 bleibt dabei aufgrund des Fixierkranzes 220 fest im Träger 105 fixiert und verdreht sich nicht. In diesem Fall bildet der Fixierkranz die Trägernase 220. Dies ermöglicht die Verwendung von flexiblen Dichtungen oder kompressiblen Ausgleichselementen und vermeidet, dass bei der Montage Scherkräfte auf die u.U. wenig robusten flexiblen Strukturen wirken. Beim Verdrehen des Sensors, Drehen sich die Bajonettflügel 240 über das Trägermaterial um den inneren Radius und verriegelt so den Sensor im Träger. Die Flügel 240 können dabei durch Schrägen so gestaltet sein, dass sie beim Befestigen des Sensors an den Träger herangezogen werden, welcher damit nochmals fester fixiert wird. Im angeführten Beispiel spannt das Bajonett am Sensor bei der Befestigung die Dichtplatte zwischen Träger und Sensor ein.

Am Fixierkranz bzw. am Trägerelement 210 sind Einfädelhilfen / -schrägen 220 angebracht, die die Montage des Sensors ermöglichen auch ohne das Bajonett oder das Loch im Träger zu sehen (dieses kann optisch durch den Sensor verdeckt sein). Durch mechanische Vorrichtungen kann vermieden werden (z.B. eine Kugelbahn o.ä.), dass der Sensor in der falschen Richtung verdreht werden kann. Weiter kann über eine ähnliche oder gleiche Vorrichtung das Überdrehen des Sensors verhindert werden. Als Anker gegenüber dem Träger bzw. der Wand 105 kann dabei jeweils der Fixierkranz 220 dienen.

Um den Verbau des Sensor weiter zu vereinfachen und kontrollierbar zu machen können am Sensor mechanische Vorrichtungen vorgehalten werden, die eine optische, haptische und/oder akustische Rückmeldung an den Operator geben, ob bzw. dass der Sensor korrekt in Endposition verdreht wurde. Möglich Klips-Vorrichtungen können dabei so ausgeführt sein, dass eine mehrfache Montage des Sensors möglich ist.

Am Sensor bzw. am Dichtring kann eine mechanische Steckersperre vorgesehen werden, die verhindert, dass der Gegenstecker am Sensor angebracht werden kann solange der Sensor gegenüber dem Träger nicht ausreichend verdreht wurde bzw. solange der Sensor sich nicht in Endposition befindet (siehe auch Figuren 5 und 7).

Diese Vorrichtung kann weiter so ausgeführt sein, dass der Sensor aus dem Träger nur dann gelöst werden kann, wenn der Gegenstecker 500 entfernt wurde. Der Gegenstecker 500 und die elektrische Kontaktierung bekommt damit eine mögliche Kontrollfunktion: ist der elektrische Kontakt vorhanden, ist der Sensor montiert bzw. wurde dieser nicht demontiert.

Um Fehlhandling möglichst weitgehend zu verhindern kann im Sensor eine Sperre gegen Verdrehen des Sensors gegenüber der Steckersperre/Dichtplatte angebracht sein. Dies kann durch einfache Sperrhaken 800 ausgeführt sein wie es in Figur 8 dargestellt ist. Der Sperrhaken 800 verhindert ein Drehen des Sensors gegenüber der Dichtplatte und umgekehrt. Erst wenn der Sperrhaken durch Kontakt bzw. durch Andrücken des Sensors an den Träger gelöst wird, ist ein Drehen des Sensors gegenüber der Dichtplatte bzw. der Steckersperre und damit die Entriegelung der Steckersperre möglich. Bei mehrfacher Ausführung dieser Sperrhaken wird ein bewusstes Fehlhandling weiter erschwert. Ziel ist es, das Drehen des Sensors und die Entsperrung des Steckers tatsächlich nur in der Zielposition im Träger zu ermöglichen bzw. anderweitige Montage oder Entsperrung des Steckers so weit möglich zu erschweren.

## Patentansprüche

1. Befestigungsvorrichtung (200) zur Befestigung in einer Öffnung (100) einer Wand (105) eines Fahizeugs, wobei die Befestigungsvorrichtung (200) folgende Merkmale aufweist:
• ein Trägerelement (210) mit zumindest einer Trgernase (220); und
• ein Halteelement (230) mit zumindest einem Halteflügel (240) zum Befestigen der Befestigungsvorrichtung (200) an der Wand, wobei das Halteelement (230) zur Befestigung der Befestigungsvorrichtung (200) gegenüber dem Trägerelement (210) drehbar durch das Trägerelement (210) hindurch angeordnet ist und wobei die Trägernase (220) dazu ausgebildet ist, in Zusammenwirkung mit der Öffnung (100) eine Drehung des Trägerelementes (210) bezüglich der Wand (105) zu blockieren;
**dadurch gekennzeichnet, dass**
der zumindest eine Halteflügel (240) eine Mehrzahl von Bereichen mit einer unterschiedlichen Dicke aufweist.

2. Befestigungsvorrichtung (200) gemäß Anspruch 1,
**dadurch gekennzeichnet, dass**
das Halteelement (230) eine Mehrzahl von Halteflügeln (240) aufweist.

3. Befestigungsvorrichtung (200) gemäß Anspruch 1,
**dadurch gekennzeichnet, dass**
der zumindest eine Halteflügel (240) im Dickenprofil eine Schräge aufweist.

4. Befestigungsvorrichtung (200) gemäß einem der Ansprüche 1 bis 3,
**dadurch gekennzeichnet, dass**
die Befestigungsvorrichtung (200) ferner ein Dichtelement (250) aufweist, welches ausgebildet ist, um die Öffnung (100) in der Wand (105) fluiddicht abzuschließen.

5. Befestigungsvorrichtung (200) gemäß einem der Ansprüche 1 bis 4,
**dadurch gekennzeichnet, dass**
der zumindest eine Halteflügel (240) eine Breite aufweist, die ausgebildet ist, um bei der Erkennung der Position des Halteflügels (240) eine Orientierung der Befestigungsvorrichtung (200) zu codieren.

6. Befestigungsvorrichtung (200) gemäß einem der Ansprüche 1 bis 5,
**dadurch gekennzeichnet, dass**
die Trägernase (220) ausgebildet ist, um eine Hilfe beim Einfügen in die Öffnung (100) zu bieten, wobei die Trägernase (220) sich vom Trägerelement (210) bis über eine äußere Kante des Halteflügels (240) erstreckt.

7. Befestigungsvorrichtung (200) gemäß einem der Ansprüche 1 bis 6,
**dadurch gekennzeichnet, dass**
das Trägerelement (210) oder das Halteelement (230) eine mechanische Einheit aufweist, die ausgebildet ist, um einem Benutzer ein Verdrehen des Halteelementes (230) in Bezug zum Trägerelement (210) um einen vorbestimmten Winkel zu signalisieren.

8. Befestigungsvorrichtung (200) gemäß einem der Ansprüche 1 bis 7,
**dadurch gekennzeichnet, dass**
das Trägerelement (210) und/oder das Halteelement (230) ein Schutzelement (260) aufweist, das ausgebildet ist, um in einer Position des Halteflügels (240) im unbefestigten Zustand eine Steckverbindungsmöglichkeit (270) zur Kontaktierung eines Sensors zu blockieren und bei einer Verdrehung des Halteflügels (240) um einen vorbestimmten Winkel in Bezug zur genannten Position des Halteflügels (240) die Steckverbindungsmöglichkeit (270) zur Kontaktierung für den Sensor freizugeben.

9. Befestigungsvorrichtung (200) gemäß einem der Ansprüche 1 bis 8,
**dadurch gekennzeichnet, dass**
das Trägerelement (210) und/oder das Halteelement (230) zumindest eine Sperreinheit (800) aufweisen, die ausgebildet ist, um das Halteelement (230) nach Erreichen einer vorbestimmten Position in dieser vorbestimmten Position zu halten.

10. Sensorelement mit einer Befestigungsvorrichtung (200) gemäß einem der Ansprüche 1 bis 9.

11. Verfahren (1000) zum Befestigen einer Befestigungsvorrichtung (200) zur Befestigung eines Elements in einer Öffnung (100) einer Wand (105) eines Fahrzeugs, wobei die Befestigungsvorrichtung (200) ein Trägerelement (210) mit zumindest einer Trägernase (220) und ein Halteelement (230) mit zumindest einem Halteflügel (240) zum Befestigen der Befestigungsvorrichtung (200) an der Wand aufweist, wobei das Halteelement (230) zur Befestigung der Befestigungsvorrichtung (200) gegenüber dem Trägerelement (210) drehbar durch das Trägerelement (210) hindurch angeordnet ist und wobei die Trägernase (220) dazu ausgebildet ist, in Zusammenwirkung mit der Öffnung (100) eine Drehung des Trägerelementes (210) bezüglich der Wand (105) zu blockieren, und wobei der zumindest eine Halteflügel (240) eine Mehrzahl von Bereichen mit einer unterschiedlichen Dicke aufweist, wobei das Verfahren die folgenden Schritte umfasst:
• Einführen (1010) der Trägernase (220) und des Halteelementes (230) in die Öffnung (100) in der Wand (105); und
• Drehen (1020) des Halteflügels (240) gegenüber dem Trägerelement (210), um die Befestigungsvorrichtung (200) an der Wand (105) zu verriegeln, wobei die Trägernase (220) eine Drehung des Trägerelementes (210) bezüglich der Wand (105) blockiert.

## Claims

1. Fastening device (200) for fixing in an opening (100) of a wall (105) of a vehicle, the fixing device (200) comprising the following features:
- a support element (210) with at least one support lug (220); and
- a retaining element (230) with at least one retaining arm (240) for fixing the fixing device (200) to the wall, the retaining element (230) being arranged in a rotatable manner all the way through the support element (210) for fixing the fixing device (200) relative to the support element (210) and the support lug (220) being configured, in cooperation with the opening (100), to block a rotation of the support element (210) relative to the wall (105);
**characterized in that**
the at least one retaining arm (240) has a plurality of regions of variable thickness.

2. Fixing device (200) according to Claim 1, **characterized in that** the retaining element (230) has a plurality of retaining arms (240).

3. Fixing device (200) according to Claim 1, **characterized in that** the at least one retaining arm (240) has a chamfer in the thickness profile.

4. Fixing device (200) according to one of Claims 1 to 3, **characterized in that** the fixing device (200) further comprises a sealing element (250) which is configured to seal the opening (100) in the wall (105) in a fluid-tight manner.

5. Fixing device (200) according to one of Claims 1 to 4, **characterized in that** the at least one retaining arm (240) has a width which is configured to index an orientation of the fixing device (200) when identifying the position of the retaining arm (240).

6. Fixing device (200) according to one of Claims 1 to 5, **characterized in that** the support lug (220) is configured to provide an aid when inserted into the opening (100), the support lug (220) extending from the support element (210) over an outer edge of the retaining arm (240).

7. Fixing device (200) according to one of Claims 1 to 6, **characterized in that** the support element (210) or the retaining element (230) has a mechanical unit, which is configured to signal to a user a twisting of the retaining element (230) relative to the support element (210) by a specific angle.

8. Fixing device (200) according to one of Claims 1 to 7, **characterized in that** the support element (210) and/or the retaining element (230) has a protective element (260) which is configured in a position of the retaining arm (240) in the unfixed state to block the possibility of a plug connection (270) for the contact of a sensor, and when twisting the retaining arm (240) by a predetermined angle relative to the aforementioned position of the retaining arm (240) to enable the possibility of a plug connection (270) for the contact of the sensor.

9. Fixing device (200) according to one of Claims 1 to 8, **characterized in that** the support element (210) and/or the retaining element (230) has at least one locking unit (800) which is configured to hold the retaining element (230) in this predetermined position after reaching a predetermined position.

10. Sensor element comprising a fixing device (200) according to one of Claims 1 to 9.

11. Method (1000) for fixing a fixing device (200) for fixing an element in an opening (100) of a wall (105) of a vehicle, the fixing device (200) comprising a support element (210) with at least one support lug (220) and a retaining element (230) with at least one retaining arm (240) for fixing the fixing device (200) to the wall, the retaining element (230) being arranged in a rotatable manner all the way through the support element (210) for fixing the fixing device (200) relative to the support element (210) and the support lug (220) being configured, in cooperation with the opening (100), to block a rotation of the support element (210) relative to the wall (105), and the at least one retaining arm (240) having a plurality of regions of variable thickness, the method comprising the following steps:
- inserting (1010) the support lug (220) and the retaining element (230) into the opening (100) in the wall (105); and
- rotating (1020) the retaining arm (240) relative to the support element (210), in order to lock the fixing device (200) to the wall (105), the support lug (220) blocking a rotation of the support element (210) relative to the wall (105).

## Revendications

1. Dispositif de fixation (200) pour la fixation dans une ouverture (100) d'une paroi (105) d'un véhicule, le dispositif de fixation (200) présentant les caractéristiques suivantes :
- un élément de support (210) avec au moins un bec de support (220) ; et
- un élément de retenue (230) avec au moins une aile de retenue (240) pour la fixation du dispositif de fixation (200) à la paroi, l'élément de retenue (230) étant disposé de façon à pouvoir tourner à travers l'élément de support (210) par rapport à l'élément de support (210) pour la fixation du dispositif de fixation (200) et le bec de support (220) étant réalisé pour bloquer, en interaction avec l'ouverture (100), une rotation de l'élément de support (210) par rapport à la paroi (105) ;
**caractérisé en ce que** l'au moins une aile de retenue (240) comporte une pluralité de régions d'épaisseur différente.

2. Dispositif de fixation (200) selon la revendication 1, **caractérisé en ce que** l'élément de retenue (230) comporte une pluralité d'ailes de retenue (240).

3. Dispositif de fixation (200) selon la revendication 1, **caractérisé en ce que** l'au moins une aile de retenue (240) présente un biseau dans le profil d'épaisseur.

4. Dispositif de fixation (200) selon l'une quelconque des revendications 1 à 3, **caractérisé en ce que** le dispositif de fixation (200) comporte en outre un élément d'étanchéité (250) réalisé pour fermer de façon étanche aux fluides l'ouverture (100) pratiquée dans la paroi (105).

5. Dispositif de fixation (200) selon l'une quelconque des revendications 1 à 4, **caractérisé en ce que** l'au moins une aile de retenue (240) présente une largeur réalisée pour coder, en cas de détection de la position de l'aile de retenue (240), une orientation du dispositif de fixation (200).

6. Dispositif de fixation (200) selon l'une quelconque des revendications 1 à 5, **caractérisé en ce que** le bec de support (220) est réalisé pour proposer une aide lors de l'insertion dans l'ouverture (100), le bec de support (220) s'étendant de l'élément de support (210) jusqu'au-delà d'une arête extérieure de l'aile de retenue (240).

7. Dispositif de fixation (200) selon l'une quelconque des revendications 1 à 6, **caractérisé en ce que** l'élément de support (210) ou l'élément de retenue (230) comporte une unité mécanique réalisée pour signaler à un utilisateur une rotation selon un angle prédéfini de l'élément de retenue (230) par rapport à l'élément de support (210).

8. Dispositif de fixation (200) selon l'une quelconque des revendications 1 à 7, **caractérisé en ce que** l'élément de support (210) et/ou l'élément de retenue (230) comporte un élément de protection (260) réalisé pour bloquer, dans une position de l'aile de retenue (240) dans un état non fixé, une liaison par possibilité d'enfichage (270), pour la mise en contact d'un capteur et en cas de rotation de l'aile de retenue (240) selon un angle prédéfini par rapport à ladite position de l'aile de retenue (240), pour libérer la liaison par possibilité d'enfichage (270) pour mettre en contact le capteur.

9. Dispositif de fixation (200) selon l'une quelconque des revendications 1 à 8, **caractérisé en ce que** l'élément de support (210) et/ou l'élément de retenue (230) comporte au moins une unité de verrouillage (800) réalisée pour retentir l'élément de retenue (230) dans une position prédéterminée une fois cette position prédéterminée atteinte.

10. Élément de capteur avec un dispositif de fixation (200) selon l'une quelconque des revendications 1 à 9.

11. Procédé (1000) pour la fixation d'un dispositif de fixation (200) pour la fixation d'un élément dans une ouverture (100) d'une paroi (105) d'un véhicule, le dispositif de fixation (200) comportant un élément de support (210) avec au moins un bec de support (220) ainsi qu'un élément de retenue (230) avec au moins une aile de retenue (240) pour la fixation du dispositif de fixation (200) à la paroi, l'élément de retenue (230) étant dispose de façon à pouvoir tourner à travers l'élément de support (210) par rapport à l'élément de support (210) pour la fixation du dispositif de fixation (200) ; et
le bec de support (220) étant réalisé pour bloquer, en interaction avec l'ouverture (100), une rotation de l'élément de support (210) par rapport à la paroi (105) et l'au moins une aile de retenue (240) comportant une pluralité de régions avec une épaisseur différente, le procédé comprenant les étapes suivantes :
- introduction (1010) du bec de support (220) et de l'élément de retenue (230) dans l'ouverture (100) pratiquée dans la paroi (105) ; et
- rotation (1020) de l'aile de retenue (240) par rapport à l'élément de support (210), pour verrouiller le dispositif de fixation (200) à la paroi (105), le bec de support (220) bloquant une rotation de l'élément de support (210) par rapport à la paroi (105).
